# EUROPÄISCHE PATENTSCHRIFT

(11) **EP 2 734 473 B1**
(45) Veröffentlichungstag und Bekanntmachung des Hinweises auf die Patenterteilung: **19.04.2017**
(21) Anmeldenummer: 12722729.6
(22) Anmeldetag: 21.05.2012
(51) Int. Cl.: C01G 25/00, C01G 33/00, C01G 35/00, C04B 35/48, H01M 10/0562, H01M 10/052

(54) **LITHIUMIONEN LEITENDE, GRANATARTIGE VERBINDUNGEN**
LITHIUM ION CONDUCTING, GARNET-LIKE COMPOUNDS
COMPOSÉS DE TYPE GRENAT CONDUISANT LES IONS DE LITHIUM

(30) Priorität: 19.07.2011 DE 102011079401
(43) Veröffentlichungstag der Anmeldung: 28.05.2014
(73) Patentinhaber: Robert Bosch GmbH, 70442 Stuttgart (DE)
(72) Erfinder: EISELE, Ulrich, 70199 Stuttgart (DE); KOEHLER, Thomas, 70499 Stuttgart (DE); HINDERBERGER, Stefan, 70186 Stuttgart (DE); LOGEAT, Alan, 70178 Stuttgart (DE); KOZINSKY, Boris, Cambridge, Massachusetts MA 02139 (US)
(86) Internationale Anmeldenummer: PCT/EP2012/059321
(87) Internationale Veröffentlichungsnummer: WO 2013/010692

(56) Entgegenhaltungen:
- DE-B3-102004 010 892
- JP-A- 2010 272 344
- ASHA GUPTA ET AL: "Optimum lithium-ion conductivity in cubic Li7-xLa3Hf2-xTaxO12", JOURNAL OF POWER SOURCES, ELSEVIER SA, CH, Bd. 209, 3. März 2012 (2012-03-03), Seiten 184-188, XP028411910, ISSN: 0378-7753, DOI: 10.1016/J.JPOWSOUR.2012.02.099 [gefunden am 2012-03-03]
- YUTAO LI ET AL: "High lithium ion conduction in garnet-type Li6La3ZrTaO12", ELECTROCHEMISTRY COMMUNICATIONS, ELSEVIER, AMSTERDAM, NL, Bd. 13, Nr. 12, 18. August 2011 (2011-08-18), Seiten 1289-1292, XP028125086, ISSN: 1388-2481, DOI: 10.1016/J.ELECOM.2011.07.008 [gefunden am 2011-08-18]
- THANGADURAI V ET AL: "Investigations on electrical conductivity and chemical compatibility between fast lithium ion conducting garnet-like Li6BaLa2Ta2O12 and lithium battery cathodes", JOURNAL OF POWER SOURCES, ELSEVIER SA, CH, Bd. 142, Nr. 1-2, 24. März 2005 (2005-03-24), Seiten 339-344, XP004812990, ISSN: 0378-7753, DOI: 10.1016/J.JPOWSOUR.2004.11.001

## Beschreibung

Die vorliegende Erfindung betrifft Verbindungen mit granatartiger Kristallstruktur, Lithiumionenleiter und galvanische Zellen.

### Stand der Technik

Die Anwendung von Lithium- und Lithiumionen-Batterie in Elektro- und Hybridfahrzeugen stellt hohe Anforderungen an die Batteriesicherheit. Flüssige Elektrolyten, wie DMC/EC/LiPF₆, sind häufig brennbar. Feste, keramische Elektrolytmaterialien sind hingegen nur schwer entzündbar und weisen eine hohe Stabilität auf, verglichen mit flüssigen Elektrolyten weisen feste, keramische Elektrolyten jedoch eine relative geringe Lithiumionenleitfähigkeit bei Raumtemperatur auf. Lithiumionen leitende Verbindungen sind beispielsweise in den Druckschriften WO 2005/085138, WO 2009/003695 A2, WO 2010/090301 A1 und EP 2 159 867 A1 beschrieben

### Offenbarung der Erfindung

Gegenstand der vorliegenden Erfindung ist eine Verbindung mit granatartiger Kristallstruktur der allgemeinen chemischen Formel:

Liₙ[A_{(3-a'-a")}A'_{(a')}A"_{(a")}][B_{(2-b'-b")}B_{(b')}B"_{(b")}][C'_{(c-)}C"_{(c")}]O₁₂

wobei A, A' und A" für eine dodekaedrische Position der granatartigen Kristallstruktur stehen, wobei
A für mindestens ein Element, ausgewählt aus der Gruppe bestehend aus La, Y, Pr, Nd, Sm, Eu, Gd, Tb, Dy, Ho, Er, Tm und Yb steht,
A' für mindestens ein Element ausgewählt aus der Gruppe bestehend aus Ca, Sr und Ba, steht,
A" für mindestens ein Element ausgewählt aus der Gruppe bestehend aus Na und K, steht,
0 ≤ a'≤ 2 ist und
0 ≤ a" < 1 ist,
wobei B, B' und B" für eine oktaedrische Position der granatartigen Kristallstruktur stehen, wobei
B für mindestens ein Element ausgewählt aus der Gruppe bestehend aus Zr, Hf und Sn, steht,
B' für mindestens ein Element ausgewählt aus der Gruppe bestehend aus Ta, Nb, Sb und Bi steht,
B" für mindestens ein Element ausgewählt aus der Gruppe bestehend aus Te, W und Mo steht,
0 ≤ b' ≤ 2 ist und
0 ≤ b" ≤ 2 ist,
wobei C' und C" für eine tetraedrische Position der granatartigen Kristallstruktur stehen, wobei
C' für mindestens ein Element ausgewählt aus der Gruppe bestehend aus Al und Ga steht,
C" für mindestens ein Element ausgewählt aus der Gruppe bestehend aus Si und Ge steht,
0 ≤ c' ≤ 0,5 ist und
0 ≤ c" ≤ 0,4 ist, und
wobei n = 7 + a'+ 2·a"- b'- 2·b"- 3·c'- 4·c" und 5,5 ≤ n ≤ 6,875 ist.

Der vorliegenden Erfindung liegt die Erkenntnis zugrunde, dass die granatartige Kristallstruktur Li₇La₃Zr₂O₁₂ ein dreidimensionales Netzwerk von oktaedrischen Positionen, die Lithiumatome mit einer hohen Beweglichkeit beinhalten, sowie als Lithiumionen-Fallen wirkende, die Lithiumionenbeweglichkeit verringernde tetraedrische Positionen umfasst. Um den Einfluss einer Besetzung der oktaedrischen und tetraedrischen Position auf die Zahl der beweglichen Ladungsträger und damit die Lithiumionenleitfähigkeit zu untersuchen, wurden daher im Rahmen der vorliegenden Erfindung eine Berechnung durchgeführt, welche darauf hinwiesen, dass der Lithiumgehalt n einen Einfluss auf die Ionenleitfähigkeit hat. Insbesondere hat sich im Rahmen der Erfindung herausgestellt, dass die Zahl der beweglichen Ladungsträger und damit die Lithiumionenleitfähigkeit in einer Verbindung mit granatartiger Kristallstruktur maximiert werden kann, indem man eine dodekaedrische Position und/oder eine oktaedrische Position und/oder eine tetraedische Position, insbesondere die dodekaedrische Position (24c) und/oder die oktaedrische Position (16a) und/oder die tetraedrische Position (24d), der granatartigen Kristallstruktur, beispielsweise ausgehend von Li₇La₃Zr₂O₁₂ oder von Li₅La₃Ta₂O₁₂, oder Li₅La₃Nb₂O₁₂, derart gezielt durch Elemente mit geeignetem Radius ersetzt werden, dass der Lithiumgehalt n in einem Bereich von 5,5 ≤ n ≤ 6,875, zum Beispiel von 5,9 ≤ n ≤ 6,6, insbesondere von 6,0 < n < 6,5, liegt, wobei überraschenderweise eine maximale Ionenleitfähigkeit in einem Bereich um einen Lithiumgehalt n von 6,3 erzielt werden kann.

Für die oktaedrische Position sind insbesondere große Elemente wie Zr, Sn, Ta, Nb, Sb, Bi, Hf, Te, W, und Mo geeignet, da durch diese sich das dreidimensionale Netzwerk, in der sich Lithiumionen befinden, vergrößert und damit die Lithiumbeweglichkeit verbessert werden kann. Ein derartiger Effekt kann auch durch besetzen der dodekaerdrischen Position mit großen Atomen wie La, Lanthanoiden, Ba, Sr, Ca, La, K und Na, zum Beispiel Ba, Sr, La und K, erzielt werden. Für die tetraedrische Position sind insbesondere Elemente wie Al, Ga, Si und Ge geeignet, da durch diese die Zahl der Lithiumfallen in der Nähe des dreidimensionalen Netzwerks verringert werden kann, wodurch folglich die Lithiumionenleitfähigkeit erhöht werden kann. Durch eine Kombination der erläuterten Besetzung der oktaedrischen, dodekaedrischen und tetraedrischen Position kann vorteilhaftweise aufgrund eines günstigen Zusammenspiels der Effekte die Lithiumionenleitfähigkeit optimiert werden. Vorteilhafterweise kann auf diese Weise die Lithiumionenleitfähigkeit bei Raumtemperatur verbessert werden. Zudem weisen die Verbindungen vorteilhafterweise eine hohe Stabilität auf und sind schwer entzündbar. So können die erfindungsgemäßen Verbindungen vorteilhafterweise als Lithiumionenleiter, beispielsweise als Lithiumionen leitende Festkörperelektrolyten, zum Beispiel in Lithium basierten galvanischen Zellen, eingesetzt werden.

Es ist möglich, zur Herstellung der Verbindungen Zirkoniumverbindungen technischer Qualität einzusetzen, welche herkömmlicherweise etwas Hafnium enthalten. B kann daher insbesondere für Zr mit einem bei Zirkoniumverbindungen technischem Grades vorkommenden Anteil an Hf stehen.

Der Lithiumgehalt n kann insbesondere ≥ 5,6 oder 5,7 oder 5,8 oder 5,85 oder 5,9 oder 5,95 oder 6,0 und/oder ≥ 6,875 oder 6,75 oder 6,7 oder 6,6 oder 6,575 oder 6,5 oder 6,49 oder 6,4 sein. Beispielsweise kann der Lithiumgehalt in einem Bereich von 5,5 ≤ n ≤ 6,875, insbesondere 5,8 oder 5,85 ≤ n ≤ 6,75, liegen.

Im Rahmen einer Ausführungsform ist 5,9 ≤ n ≤ 6,6. Zum Beispiel kann der Lithiumgehalt n 5,9 oder 5,95 ≤ n ≤6,6 oder 5,5, insbesondere 6,0 oder 6,01 oder 6,1 oder 6,2 ≤ n ≤ 6,5 oder 6,49 oder 6,4 oder 6,39, sein. Vorzugsweise ist der Lithiumgehalt 6,0 ≤ n ≤ 6,5. Zum Beispiel kann der Lithiumgehalt 6,0 oder 6,01 oder 6,1 oder 6,2 ≤ n ≤ 6,5 oder 6,49 oder 6,4 oder 6,39, sein. Diese Bereiche haben sich als besonders vorteilhaft erwiesen.

Der Lithiumgehalt n kann beispielsweise eine Erhöhung des B'- und/oder B"-Anteils (b' beziehungsweise b") und/oder des C' und/oder C"-Anteils (c' beziehungsweise c") kann gesenkt und durch Erhöhung des A'- und/oder A"-Anteils (a' beziehungsweise a") erhöht werden, und umgekehrt, um n in den gewünschten Bereich einzustellen.

Im Rahmen einer weiteren Ausführungsform steht B' für Ta oder für Ta und mindestens ein Element ausgewählt aus der Gruppe bestehend aus Nb, Sb und Bi.

Beispielsweise kann b' > 0 und/oder b" > 0 sein.

Im Rahmen einer weiteren Ausführungsform ist b' + b" > 0.

B" kann insbesondere für Te stehen.

Im Rahmen einer weiteren Ausführungsform steht C' für Al.

Im Rahmen einer weiteren Ausführungsform steht C" für Si.

Beispielsweise kann c' > 0 und/oder c" > 0 sein.

Im Rahmen einer weiteren Ausführungsform ist c' + c" > 0.

Im Rahmen einer weiteren Ausführungsform steht A für La oder für La und mindestens ein Element ausgewählt aus der Gruppe bestehend aus Y, Pr, Nd, Sm, Eu, Gd, Tb, Dy, Ho, Er, Tm und Yb. Insbesondere kann A für La stehen.

Beispielsweise kann a' > 0 und/oder a" > 0 sein.

Im Rahmen einer weiteren Ausführungsform ist a' + a" > 0.

Im Rahmen einer weiteren Ausführungsform weist die Verbindung mit granatartiger Kristallstruktur die allgemeine chemische Formel auf:

Liₙ[La_{(3-a')}A'_{(a')}[Zr_{(2-b')}B_{(b')}][Al_{(c')}Si_{(c")}]O₁₂,

wobei La und A' und für eine dodekaedrische Position der granatartigen Kristallstruktur stehen, wobei
A' für mindestens ein Element ausgewählt aus der Gruppe bestehend aus Ca, Sr und Ba, steht, und
0 < a'< 2 ist,
wobei Zr und B' für eine oktaedrische Position der granatartigen Kristallstruktur stehen, wobei
B' für mindestens ein Element ausgewählt aus der Gruppe bestehend aus Ta, Nb, Sb und Bi steht, und
0 < b' ≤ 2, und
wobei Al und Si für eine tetraedrische Position der granatartigen Kristallstruktur stehen, wobei
0 ≤ c' ≤ 0,5 ist
0 ≤ c" ≤ 0,4 ist, und
c' + c" > 0, insbesondere c' > 0 und/oder c" > 0 ist, und
wobei n = 7 + a'+ 2·a"- b'- 2·b"- 3·c'- 4·c" und 5,5 ≤ n ≤ 6,875, beispielsweise 5,9 ≤ n ≤ 6,6, zum Beispiel 6,0 ≤ n ≤ 6,5, ist.

Im Rahmen einer weiteren Ausführungsform stehen C' und C", insbesondere Al und/oder Si, für die tetraedrische Position 24d der granatartigen Kristallstruktur beziehungsweise besetzen diese.

Im Rahmen einer weiteren Ausführungsform stehen B, B' und B", insbesondere Zr und B', für die oktaedrische Position 16a der granatartigen Kristallstruktur beziehungsweise besetzen diese.

Im Rahmen einer weiteren Ausführungsform stehen A, A' und A", insbesondere A', für die dodekaedrische Position 24c der granatartigen Kristallstruktur beziehungsweise besetzen diese.

Li kann beispielsweise die oktaedrische Position 96h und/oder die tetraedrische Position 24d, beispielsweise zusammen mit C' und C", der granatartigen Kristallstruktur besetzen.

Es ist möglich, dass bei den Verbindungen wenn B' Nb, insbesondere Ta und/oder Nb, ist, 6,0 < n < 6,4 oder 5,5 ≤ n ≤ 6,875, beispielsweise 5,9 ≤ n ≤ 6,6, insbesondere 6,0 ≤ n ≤ 6,5, und c' + c" > 0 und/oder a' + a" > 0 sein kann; und/oder wenn b' = 2 ist, 6,0 < n < 6,875, zum Beispiel 6,0 < n ≤ 6,6, beispielsweise 6,0 < n ≤ 6,5, oder 5,5 ≤ n ≤ 6,875, beispielsweise 5,9 ≤ n ≤ 6,6, insbesondere 6,0 ≤ n ≤ 6,5, und c' + c" > 0 sein kann beziehungsweise wenn 1,8 < b' ≤ 2 ist, c'+ c" > 0, beispielsweise c'+ c" > 0,1, oder 6,0 < n < 6,875, beispielsweise 6,0 < n ≤ 6,5, oder 5,5 ≤ n ≤ 6,875, beispielsweise 5,9 ≤ n ≤ 6,6, insbesondere 6,0 ≤ n ≤ 6,5, und c' + c" > 0 sein kann; und/oder wenn 0 ≤ b' ≤ 0,5, beispielsweise 0 ≤ b' ≤ 0,65, zum Beispiel 0 ≤ b'≤ 1 ist, a'+ a" > 0, zum Beispiel a'+ a" > 0,2, und/oder c' + c" > 0 sein kann; und/oder wenn C' Al ist, c" > 0 und/oder b' + b" > 0, insbesondere b' > 0, und/oder a' + a" > 0, insbesondere a' > 0, sein kann.

Ein weiterer Gegenstand der vorliegenden Erfindung ist ein Lithiumionenleiter, insbesondere ein Lithiumionen leitender Festkörperelektrolyt, welcher eine erfindungsgemäße Verbindung umfasst.

Ferner betrifft die vorliegende Erfindung eine galvanische Zelle, insbesondere Batterie, beispielsweise auf Lithium-Basis, welche eine erfindungsgemäße Verbindung oder einen erfindungsgemäßen Lithiumionenleiter umfasst.

Im Rahmen einer Ausführungsform ist dabei die galvanische Zelle eine Lithium-Schwefel-Zelle, Lithium-Sauerstoff-Zelle oder Lithium-Ionen-Zelle.

Im Rahmen einer weiteren Ausführungsform umfasst die galvanische Zelle die erfindungsgemäße Verbindung beziehungsweise den erfindungsgemäßen Lithiumionenleiter als Lithiumionen leitenden Festkörperelektrolyten, insbesondere zum Separieren der Kathode und der Anode.

Schließlich betrifft die vorliegende Erfindung ein Verfahren zur Herstellung einer erfindungsgemäßen Verbindung sowie nach dem Verfahren hergestellte Verbindungen, wobei das Verfahren die folgenden Verfahrensschritte umfasst:
a) Bereitstellen einer Pulvermischung, umfassend, insbesondere bestehend aus:
   - mindestens eine Lithiumverbindung, und
   - mindestens eine Verbindung eines Elements, ausgewählt aus der Gruppe bestehend aus La, Y, Pr, Nd, Sm, Eu, Gd, Tb, Dy, Ho, Er, Tm und Yb, und
   - mindestens eine Verbindung eines Elements, ausgewählt aus der Gruppe bestehend aus Zr, Hf, Sn, Ta, Nb, Sb, Bi, Te, W, und Mo, und
   - gegebenenfalls mindestens eine Verbindung eines Elements, ausgewählt aus der Gruppe bestehend aus Al, Ga, Si und Ge und/oder
   - gegebenenfalls mindestens eine Verbindung eines Elements, ausgewählt aus der Gruppe bestehend aus Ca, Sr, Ba, Na und K,
   wobei die Pulvermischung die Verbindungen der von Lithium unterschiedlichen Elemente in stöchiometrischen Mengen aufweist, welche derart gewählt sind, dass der Lithiumgehalt der auszubildenden Verbindung mit granatartiger Kristallstruktur in einem Bereich von 5,5 ≤ n ≤ 6,875, beispielsweise 5,9 ≤ n ≤ 6,6, insbesondere 6,0 ≤ n ≤ 6,5, liegt;
b) Kalzinieren der Pulvermischung bei einer Temperatur in einem Temperaturbereich von ≥ 600 °C bis ≤ 1000 °C, insbesondere von ≥ 850 °C bis ≤ 950 °C, zum Beispiel bei etwa 900 °C,
c) gegebenenfalls Verpressen der Pulvermischung zu einem Formkörper, insbesondere unter uniaxialem und isostatischen Druck,
d) Sintern der Pulvermischung beziehungsweise des Formkörpers bei einer Temperatur in einem Temperaturbereich von ≥ 900°°C bis ≤ 1250 °C, insbesondere von ≥ 1100 °C bis ≤ 1200 °C, zum Beispiel bei etwa 1150 °C.

Die mindestens eine Lithiumverbindung kann beispielsweise ausgewählt sein aus der Gruppe bestehend aus Lithiumcarbonat; Lithiumnitrat, Lithiumhydroxid, Lithiumoxid und Mischungen davon.

Die Verbindungen der von Lithium unterschiedlichen Elemente können beispielsweise ausgewählt sein aus der Gruppe bestehend aus Oxiden, Nitraten, Hydroxiden, Carbonate, Acetaten und Mischungen davon.

Insbesondere kann dabei Lithium in einem Überschuss, beispielsweise von 10 Gew.-%, eingesetzt werden, um Lithiumverluste beim Sintern auszugleichen.

Der Reinheitsgrad der Ausgangsverbindungen kann insbesondere ≥ 90 % betragen. Zirkoniumverbindungen können dabei eine Ausnahme darstellen und in technischer Qualität eingesetzt werden, was einen Anteil an Hafnium zu Folge haben kann.

Verfahrensschritt a) kann insbesondere bei ≥ 100 °C, zum Beispiel für ≥ 30 min oder ≥ 45 min oder ≥ 1 h, erfolgen.

Die Heizrate kann in Verfahrensschritt d) beispielsweise ≥ 1 K/min, zum Beispiel ≥ 3 K/min, betragen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen Graphen zur Veranschaulichung von berechneten Ergebnissen bezüglich der Abhängigkeit der Zahl von beweglichen Ladungsträger vom Lithiumgehalt n;
- Fig. 2: einen Graphen zur Veranschaulichung von experimentellen Ergebnissen bezüglich der Abhängigkeit der Ionenleitfähigkeit vom Lithiumgehalt n;
- Fig. 3: ein Impedanzspektrum von Li_{6,25}La₃Ta_{0,75}Zr_{1,25}O_{12;}
- Fig. 4: ein Impedanzspektrum von Al_{0,17}Li_{6,49}La₃Zr₂O₁₂; und
- Fig. 5: REM-EDS/WDS-Spektrum eines zufällig ausgewählten Kristallkorns in einer Probe von Al_{0,2}Li_{6,4}La₃Zr₂O₁₂.

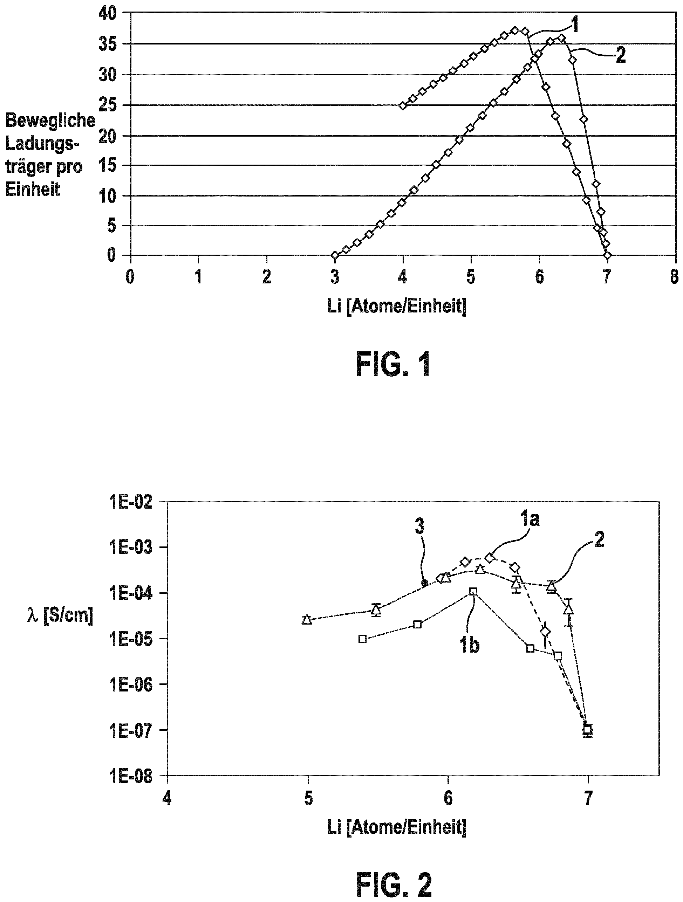

Figur 1 zeigt das Ergebnis von Berechnungen der beweglichen Ladungsträger für unterschiedlich zusammengesetzte Verbindungen mit granatartiger Kristallstruktur, ausgehend von der Basisverbindung Li₇La₃Zr₂O₁₂, in Abhängigkeit von Lithiumgehalt pro Granatformeleinheit. Zur Berechnung der Ladungsträger wurden Besetzungszahlen verwendet. Die Aktivierungsenergie zur Aktivierung von beweglichen Ladungsträgern wurde in den Berechnungen nicht berücksichtigt.

Der mit dem Bezugszeichen 2 gekennzeichnete Kurvenverlauf veranschaulicht die Ergebnisse für eine Belegung der ansonsten mit Zr⁴⁺ belegten oktaedrischen Position mit einem fünfwertigen Element, beispielsweise Ta⁵⁺, wobei der mit dem Bezugszeichen 1 gekennzeichnete Kurvenverlauf die Ergebnisse für eine Belegung der tetraedrischen ansonsten mit Li⁺ besetzten Position mit einem dreiwertigen Element, beispielsweise Al³⁺, unter Konstanthaltung des Zirkoniumanteils illustriert.

Figur 1 zeigt, dass gemäß der durchgeführten Berechnungen eine hohe Ionenleitfähigkeit für eine Besetzung der oktaedrischen Position in einem Bereich von 5,9 bis 6,5 und für eine Besetzung der tetraedrischen Position in einem Bereich von 5,3 bis 6,0 zu erwarten ist, wobei das berechnete ermittelte Maximum der beweglichen Ladungsträger bei einer Besetzung der oktaedrischen Position bei etwa 6,3 Lithiumatomen pro Granatformeleinheit und bei einer Besetzung der tetraedrischen Position bei 5,8 Lithiumatomen pro Granatformeleinheit liegt. Figur lässt vermuten, dass bei einer gleichzeitigen Dotierung der oktaedrischen und tetraedrischen Position das Maximum der Ionenleitfähigkeit in einem Bereich zwischen 5,5 und 6,5 zu erwarten ist.

### Herstellung

Ta-, Nb-, Al-, Si- und Sr-enthaltende Verbindungen mit granatartiger Struktur, wurden, insbesondere ausgehend von der Basisstruktur Li₇La₃Zr₂O₁₂, durch Festkörperreaktion bei erhöhten Temperaturen hergestellt. Zur Herstellung wurden stöchiometrische Mengen von Ausgangsmaterialien mit hohem Reinheitsgrad eingesetzt. Lithium wurde, insbesondere in Form von Li₂CO₃, beispielsweise mit einem Reinheitsgrad von > 99,0 %, insbesondere in einem Überschuss von 10 % eingesetzt. Der Überschuss diente dabei dazu, einen Lithiumverlust während des Sintervorgangs zu kompensieren. Lanthan wurde, insbesondere in Form von La₂O₃, beispielsweise mit einem Reinheitsgrad von > 99,99 % und insbesondere bei 900 °C für 12 h getrocknet, eingesetzt. Zirkonium und Strontium wurde, insbesondere in Form von ZrO₂ beziehungsweise SrCO₃, beispielsweise mit einem Reinheitsgrad von > 99 % eingesetzt. Aluminium wurde beispielsweise, in Form von γ-Al₂O₃, beispielsweise mit einem Reinheitsgrad von 99,60 %, eingesetzt. Silizium, Tantal und Niob wurden, insbesondere in Form von SiO₂ beziehungsweise Ta₂O₅ beziehungsweise Nb₂O₅, insbesondere mit einem Reinheitsgrad von > 99,85 % eingesetzt. Die eingewogenen Pulver wurden im Wasser mittels eines Rotationsverdampfers 1h lang bei etwa 100 °C gemischt. Die Pulvermischungen wurden bei 900 °C kalziniert. Die Produkte wurden unter uniaxialem und isostatischen Druck zu Tabletten verpresst und 5 h lang bei 1150 °C gesintert. Die Heizrate betrug Fällen 3 K/min.

Tabelle 1 zeigt die Zusammensetzung und Ionenleitfähigkeit der hergestellten Verbindungen:

**Table 1: Zusammensetzung und Ionenleitfähigkeit**

| Zusammensetzung | Ionenleitfähigkeit (S/cm) |
|---|---|
| Li₇La₃Zr₂O₁₂ | 1·10⁻⁷ |
| Li_{6.875}La₃Ta_{0.125}Zr_{1.875}O₁₂ | 4,0·10⁻⁵ |
| Li_{6.75}La₃Ta_{o.25}Zr_{1.75}O₁₂ | 1,3·10⁻⁴ |
| Li_{6.5}La₃Ta_{0.5}Zr_{1.5}O₁₂ | 1,5·10⁻⁴ |
| Li_{6,25}La₃Ta_{0,75}Zr_{1,25}O₁₂ | 2,7·10⁻⁴ |
| Li₆La₃TaZrO₁₂ | 2,0·10⁻⁴ |
| Li_{5.5}La₃Ta_{1,5}Zr_{0.5}O₁₂ | 4,0·10⁻⁵ |
| Li₅La₃Ta₂O₁₂ | 2,8·10⁻⁵ |
| Al_{0,1}Li_{6,7}La₃Zr₂O₁₂ | 1,3·10⁻⁵ |
| Al_{0,17}Li_{6,49}La₃Zr₂O₁₂ | 3,2·10⁻⁴ |
| Al_{0.23}Li_{6.31}La₃Zr₂O₁₂ | 5,2·10⁻⁴ |
| Al_{0,29}Li_{6,13}La₃Zr₂O₁₂ | 4,4·10⁻⁴ |
| Al_{0,35}Li_{5,95}La₃Zr₂O₁₂ | 9,4·10⁻⁵ |
| Al_{0,3}Li_{5,85}Sr_{0,25}La_{2,75}Nb_{0,5}Zr_{1,5}O₁₂ | 1,5·10⁻⁴ |
| Si_{0.05}Li_{6,8}La₃Zr₂O₁₂ | 1,5·10⁻⁶ |
| Si_{0,1}Li_{6,6}La₃Zr₂O₁₂ | 2,8·10⁻⁶ |
| Si_{0,2}Li_{6,2}La₃Zr₂O₁₂ | 4,4·10⁻⁵ |
| Si_{0,3}Li_{5,8}La₃Zr₂O₁₂ | 1,5·10⁻⁵ |
| Si_{0,4}Li_{5,4}La₃Zr₂O₁₂ | 7,3·10⁻⁶ |

Verbindungen Li₇La₃Zr₂O₁₂ und Li₇La₃Ta₂O₁₂ sind nicht erfindungsgemäß.

Die Ionenleitfähigkeit der gesinterten Tabletten wurde in Luft bei Raumtemperatur unter Verwendung von lithiumblockierenden Goldelektroden mittels eines Impedanzspektrometers (Solatron; 0,05 Hz-10 MHz) gemessen.

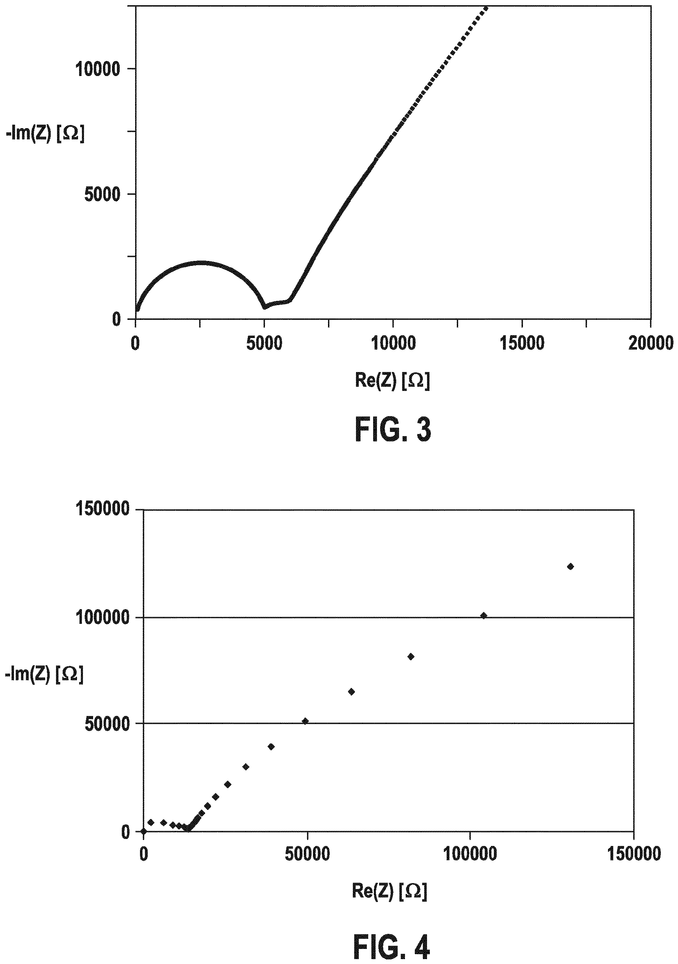

In Figur 3 ist das Impedanzspektrum von Li_{6,25}La₃Ta_{0,75}Zr_{1,25}O₁₂ und in Figur 4 ist das Impedanzspektrum von Al_{0,17}Li_{6,49}La₃Zr₂O₁₂ exemplarisch dargestellt. Der ansteigende Ast im niedrigen Frequenzbereich der Spektren, ist ein Indiz für die Lithiumionenleitfähigkeit des Materials an.

Die bei Raumtemperatur ermittelten Ionenleitfähigkeitswerte sind in Tabelle 1 und Figur 2 angegeben. Dabei zeigt Figur 2 einen Graphen in dem die Ionenleitfähigkeit der hergestellten Verbindungen gegenüber dem Lithiumgehalt pro Grantformeleinheit aufgetragen ist. Figur 2 veranschaulicht, dass überraschender Weise sowohl bei einer Besetzung der der oktaedrischen Position mit Ta beziehungsweise Nb sowie gegebenenfalls der dodekaedrischen Position mit Sr, als auch bei einer Besetzung der tetraedrischen Position mit Al beziehungsweise Si die Ionenleitfähigkeit überraschender Weise bei einem Lithiumgehalt um etwa 6,3 ein Maximum aufweist. Dabei folgen die experimentell ermittelten Werte einem Kurvenverlauf, welcher sehr ähnlich dem rechnerisch ermittelten Kurvenverlauf ist. Auffällig ist, dass die Maxima der tetraedrisch dotierten Verbindungen (1a: Al, 1b: Si) nicht wie durch die theoretische Berechnung (1) bestimmt bei einem Lithiumgehalt um 5,8, sondern stattdessen ebenfalls wie die oktaedrisch dotierten Verbindungen (2: Ta) um 6,3 liegen. Dies kann dadurch erklärt werden, dass bei der theoretischen Berechnung der Einfluss der Aktivierungsenergie für die Bewegung der Lithiumionen nicht berücksichtigt wurde, welche offensichtlich in der Praxis zu einer Verschiebung des für tetraedrisch dotierte Verbindungen (1) rechnerisch ermittelten Kurvenverlaufs in Richtung eines höheren Lithiumgehalts n, insbesondere mit einem Maximum im Bereich um 6,3, zur Folge hat.

Tabelle 1 und Figur 2 zeigen, dass von den hergestellten Verbindungen Al_{0,23}Li_{6,31}La₃Zr₂O₁₂ mit 5,2·10⁻⁴ S/cm die höchste Ionenleitfähigkeit aufwies. Die Ionenleitfähigkeit von Al_{0,3}Li_{5,85}Sr_{0,25}La_{2,75N}b_{0,5}Zr_{1,5}O₁₂ ist in Figur 2 mit dem Bezugszeichen 3 gekennzeichnet. Tabelle 1 zeigt, dass Al_{0,3}Li_{5,85}Sr_{0,25}La_{2,75}Nb_{0,5}Zr_{1,5}O₁₂ mit 1,5·10⁻⁴ S/cm eine ähnliche Ionenleitfähigkeit wie Li_{6,5}La₃Ta_{0,5}Zr_{1,5}O₁₂ mit 1,5·10⁻⁴ S/cm aufwies. Figur 2 veranschaulicht, dass Al_{0,3}Li_{5,85}Sr_{0,25}La_{2,75}Nb_{0,5}Zr_{1,5}O₁₂ 3 mit n = 5,85 zum Erreichen einer optimalen Ionenleitfähigkeit (n ∼ 6,3) einen zu geringen Lithiumgehalt n aufweist. Der Lithiumgehalt könnte n dabei zum Beispiel unter Anderem durch eine Verringerung des Aluminiumgehalts und/oder eine Erhöhung des Strontiumgehalts erzielt werden. Es ist daher zu erwarten, dass durch eine Modifikation von Al_{0,3}Li_{5,85}Sr_{0,25}La_{2,75}Nb_{0,5}Zr_{1,5}O₁₂ zu einer analogen Verbindung mit einem Lithiumgehalt n bei etwa 6,3 eine deutlich höhere Lithiumionenleitfähigkeit als die von Li_{6,5}La₃Ta_{0,5}Zr_{1,5}O₁₂ erzielt werden könnte. Der experimentell ermittelte und rechnerisch, insbesondere um die Aktivierungsenergie korrigierte, Kurvenverlauf weist darauf hin, dass zum Beispiel bei einem Aluminiumgehalt um 0,15 oder einem Strontiumgehalt um 0,7 oder einem Aluminiumgehalt von 0,15 bis 0,3 und einem Strontiumgehalt von 0,25 bis 0,7 eine Ionenleitfähigkeit erzielt werden könnte, welche höher als 1,5·10⁻⁴ S/cm und insbesondere auch höher als 4,4·10⁻⁴ S/cm sein könnte.

Insgesamt bestätigen die Figur 2 gezeigten, experimentellen Ergebnisse, dass die Ionenleitfähigkeit durch Bildung von, die Lithiumionenbeweglichkeit erhöhenden Leerstellen und durch die Besetzung von, als Lithiumfalle wirkenden tetraedrischen Positionen mit anderen Elementen erhöht werden kann, wobei überraschenderweise eine maximale Ionenleitfähigkeit in einem Bereich um einen Lithiumgehalt n von 6,3 erzielt werden kann.

Mittels Ab-Initio-Computersimulation konnte nachgewiesen werden, dass eine Kristallstruktur in deren Al³⁺ die tetraedrischen Positionen belegt, die niedrigste gesamte Energie hat. Daraus lässt sich schließen, dass Al³⁺ bevorzugt die tetraedrischen Positionen einer granatartigen Kristallstruktur.

Das Ergebnis der Ab-Initio-Computersimulation steht im Einklang mit dem Ergebnis, welches mittels Röntgendiffraktometrie und Rietveld-Verfeinerung für die Belegung von Aluminium in der granatartigen Verbindung Al_{0,2}Li_{6,4}La₃Zr₂O₁₂ ermittelt wurde. Für eine bessere Auflösung wurde bei der Messung reine κ-α1 Strahlung verwendet. Für die Anpassung mittels Rietveld-Verfahren wurde das Programm TOPAS verwendet. Die Ergebnisse der Rietveld-Verfeinerung waren von guter Qualität. In Tabelle 2 sind die Ergebnisse der Rietveld-Verfeinerung dargestellt:

**Tabelle 2: Ergebnisse der Rietveld-Verfeinerung bezüglich der Belegung der tetraedrischen und oktaedrischen Positionen in Al_{0,2}Li_{6,4}La₃Zr₂O₁₂**

| Position | Relative Al Belegung |
|---|---|
| Tetraeder 24d | 0,2 |
| Oktaeder 48g | 0 |
| Oktaeder 96h | < 0,03 |

Tabelle 2 zeigt, dass in Al_{0,2}Li_{6,4}La₃Zr₂O₁₂ die tetraederische Position 24d mit einem Röntgen-empfindlichen Element, insbesondere Aluminium, besetzt ist, wobei die oktaedrischen Positionen 48g und 96h nicht mit einem Röntgen-empfindlichen Element besetzt sind. Die Positionen der Lithiumatome konnten aus den Röntgenbeugungsmessungen nicht bestimmt werden.

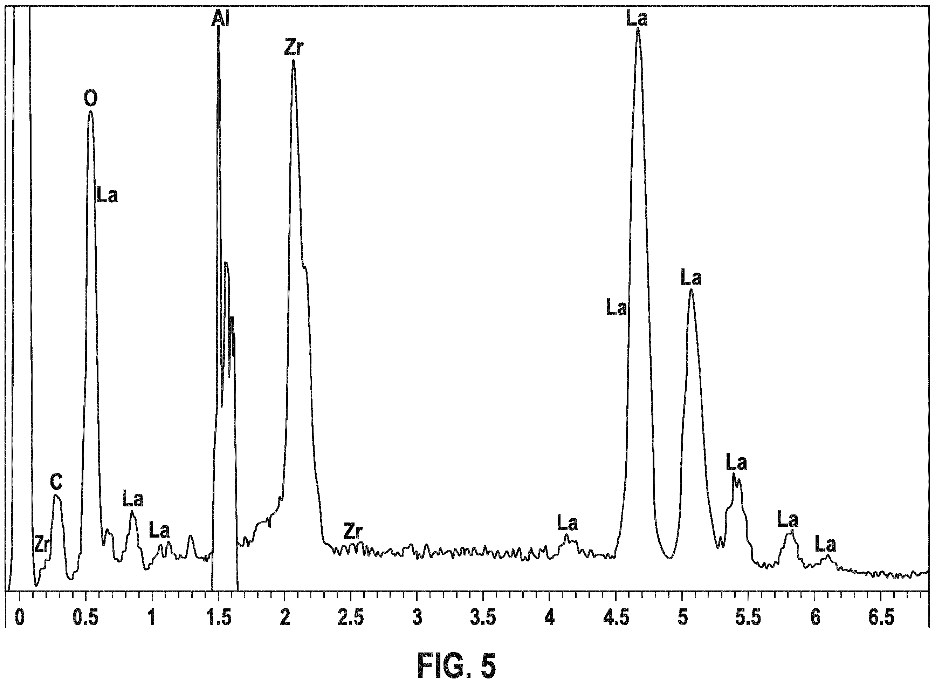

Die Figur 5 zeigt das Ergebnis einer von vielen REM-EDS/WDS-Analysen von unterschiedlichen zufällig ausgewählten Kristallkörnern in einem Querschliff durch eine Tablette aus Al_{0,2}Li_{6,4}La₃Zr₂O₁₂. Figur 5 zeigt, dass Aluminium in beiden Kristallen in der erwarteten Menge enthalten ist. Daraus ist zu schließen, dass die Aluminiumatome in die granatartige Kristallstruktur eingebaut sind und nicht als Nebenphase in dem Material vorliegen. Dies stützt auch das Ergebnis der Rietveld-Verfeinerung, dass Aluminium die tetraedrischen Positionen 24d belegt.

## Patentansprüche

1. Verbindung mit granatartiger Kristallstruktur der allgemeinen chemischen Formel:
Liₙ[A_{(3-a' -a")}A'_{(a')}A"_{(a")}][B_{(2-b'-b")}B'_{(b')}B"_{(b")}][C'_{(c')}C"_{(c")}]O₁₂
wobei A, A' und A" für eine dodekaedrische Position der granatartigen Kristallstruktur stehen, wobei
A für mindestens ein Element, ausgewählt aus der Gruppe bestehend aus La, Y, Pr, Nd, Sm, Eu, Gd, Tb, Dy, Ho, Er, Tm und Yb steht,
A' für mindestens ein Element ausgewählt aus der Gruppe bestehend aus Ca, Sr und Ba, steht,
A" für mindestens ein Element ausgewählt aus der Gruppe bestehend aus Na und K, steht,
0 ≤ a'< 2 ist und
0 ≤ a" < 1 ist,
wobei B, B' und B" für eine oktaedrische Position der granatartigen Kristallstruktur stehen, wobei
B für mindestens ein Element ausgewählt aus der Gruppe bestehend aus Zr, Hf und Sn, steht,
B' für mindestens ein Element ausgewählt aus der Gruppe bestehend aus Ta, Nb, Sb und Bi steht,
B" für mindestens ein Element ausgewählt aus der Gruppe bestehend aus Te, W und Mo steht,
0 ≤ b' ≤ 2 ist und
0 ≤ b" ≤ 2 ist,
wobei C' und C" für eine tetraedrische Position der granatartigen Kristallstruktur stehen, wobei
C' für mindestens ein Element ausgewählt aus der Gruppe bestehend aus Al und Ga steht,
C" für mindestens ein Element ausgewählt aus der Gruppe bestehend aus Si und Ge steht,
0 ≤ c' ≤ 0,5 ist und
0 ≤ c" ≤ 0,4 ist, und
wobei n = 7 + a'+ 2·a"- b'- 2·b"- 3·c'- 4·c" und 5,5 ≤ n ≤ 6,875 ist,
wobei wenn b' = 2 ist, 6,0 < n < 6,875 oder 5,5 ≤ n ≤ 6,875 und c' + c" > 0 ist, und
wobei wenn B' Nb ist, 6,0 < n < 6,4 oder 5,5 ≤ n ≤ 6,875 und c' + c" > 0 und/oder a' + a" > 0 ist.

2. Verbindung nach Anspruch 1, wobei 5,9 ≤ n ≤ 6,6, insbesondere 6,0 < n < 6,5, ist.

3. Verbindung nach Anspruch 1 oder 2, wobei B' für Ta oder für Ta und mindestens ein Element ausgewählt aus der Gruppe bestehend aus Nb, Sb und Bi steht, und/oder wobei b' + b" > 0 ist.

4. Verbindung nach einem der Ansprüche 1 bis 3, wobei C' für Al und/oder C" für Si steht und/oder wobei c' + c" > 0 ist.

5. Verbindung nach einem der Ansprüche 1 bis 4, wobei a' + a" > 0 ist.

6. Verbindung nach einem der Ansprüche 1 bis 5, aufweisend eine granatartige Kristallstruktur der allgemeinen chemischen Formel:
Liₙ[La_{(3-a')}A'_{(a')}[Zr_{(2-b')}B'_{(b)]}[Al_{(c')}Si_{(c")}]O₁₂
wobei La und A' für eine dodekaedrische Position der granatartigen Kristallstruktur stehen, wobei
A' für mindestens ein Element ausgewählt aus der Gruppe bestehend aus Ca, Sr und Ba, steht, und
0 < a'< 2 ist,
wobei Zr und B' für eine oktaedrische Position der granatartigen Kristallstruktur stehen, wobei
B' für mindestens ein Element ausgewählt aus der Gruppe bestehend aus Ta, Nb, Sb und Bi steht, und
0 < b' ≤ 2, und
wobei Al und Si für eine tetraedrische Position der granatartigen Kristallstruktur stehen, wobei
0 ≤ c' ≤ 0,5 ist
0 ≤ c" ≤ 0,4 ist, und
c' + c" > 0, insbesondere c' > 0 und/oder c" > 0 ist, und
wobei n = 7 + a'+ 2·a"- b'- 2·b"- 3·c'- 4·c" und 5,5 ≤ n ≤ 6,875, insbesondere 5,9 ≤ n ≤ 6,6, beispielsweise 6,0 < n < 6,5, ist.

7. Verbindung nach einem der Ansprüche 1 bis 6, wobei C' und C", insbesondere Al und/oder Si für die tetraedrische Position 24d der granatartigen Kristallstruktur stehen, und/oder wobei B, B' und B", insbesondere Zr und B', für die oktaedrische Position 16a der granatartigen Kristallstruktur stehen, und/oder wobei A, A' und A", insbesondere A', für die dodekaedrische Position 24c der granatartigen Kristallstruktur stehen.

8. Lithiumionenleiter, insbesondere Lithiumionen leitender Festkörperelektrolyt, umfassend eine Verbindung nach einem der Ansprüche 1 bis 7.

9. Galvanische Zelle, insbesondere Batterie, umfassend eine Verbindung nach einem der Ansprüche 1 bis 7 oder einen Lithiumionenleiter nach Anspruch 8.

10. Galvanische Zelle nach Anspruch 9, wobei die galvanische Zelle eine Lithium-Schwefel-Zelle, Lithium-Sauerstoff-Zelle oder Lithium-Ionen-Zelle ist.

11. Galvanische Zelle nach Anspruch 9 oder 10, wobei die galvanische Zelle die Verbindung nach einem der Ansprüche 1 bis 7 beziehungsweise den Lithiumionenleiter nach Anspruch 8 als Lithiumionen leitenden Festkörperelektrolyten, insbesondere zum Separieren der Kathode und der Anode, umfasst.

12. Verfahren zur Herstellung einer Verbindung mit granatartiger Kristallstruktur, insbesondere nach einem der Ansprüche 1 bis 7 umfassend die Verfahrensschritte:
a) Bereitstellen einer Pulvermischung, umfassend, insbesondere bestehend aus:
- mindestens eine Lithiumverbindung,
und
- mindestens eine Verbindung eines Elements, ausgewählt aus der Gruppe bestehend aus La, Y, Pr, Nd, Sm, Eu, Gd, Tb, Dy, Ho, Er, Tm und Yb, und
- mindestens eine Verbindung eines Elements, ausgewählt aus der Gruppe bestehend aus Zr, Hf, Sn, Ta, Nb, Sb, Bi, Te, W und Mo, und/oder
- gegebenenfalls mindestens eine Verbindung eines Elements, ausgewählt aus der Gruppe bestehend aus Al, Ga, Si und Ge und/oder
- gegebenenfalls mindestens eine Verbindung eines Elements, ausgewählt aus der Gruppe bestehend aus Ca, Sr, Ba, Na und K,
wobei die Pulvermischung die Verbindungen der von Lithium unterschiedlichen Elemente in stöchiometrischen Mengen aufweist, welche derart gewählt sind, dass der Lithiumgehalt der auszubildenden Verbindung mit granatartiger Kristallstruktur in einem Bereich von 5,5 ≤ n ≤ 6,875, beispielsweise 5,9 ≤ n ≤ 6,6, insbesondere 6,0 ≤ n ≤ 6,5, liegt;
b) Kalzinieren der Pulvermischung bei einer Temperatur in einem Temperaturbereich von ≥ 600 °C bis ≤ 1000 °C, insbesondere von ≥ 850 °C bis ≤ 950 °C,
c) gegebenenfalls Verpressen der Pulvermischung zu einem Formkörper, insbesondere unter uniaxialem und isostatischen Druck,
d) Sintern der Pulvermischung beziehungsweise des Formkörpers bei einer Temperatur in einem Temperaturbereich von ≥ 900 °C bis ≤ 1250 °C, insbesondere von ≥ 1100 °C bis ≤ 1200 °C.

## Claims

1. Compound having a garnet-like crystal structure of the general chemical formula:
Liₙ[A_{(3-a'-a")}A'_{(a')}A"_{(a")}][B_{(2-b'-b")}B'_{(b')}B"_{(b")}][C'_{(c')}C"_{(c")}]O₁₂
Where A, A' and A'' each represent a dodecahedral position of the garnet-like crystal structure and
A is at least one element selected from the group consisting of La, Y, Pr, Nd, Sm, Eu, Gd, Tb, Dy, Ho, Er, Tm and Yb,
A' is at least one element selected from the group consisting of Ca, Sr and Ba,
A'' is at least one element selected from the group consisting of Na and K,
0 ≤ a' < 2 and
0 ≤ a" < 1,
where B, B' and B" each represent an octahedral position of the garnet-like crystal structure and
B is at least one element selected from the group consisting of Zr, Hf and Sn,
B' is at least one element selected from the group consisting of Ta, Nb, Sb and Bi,
B'' is at least one element selected from the group consisting of Te, W and Mo,
0 ≤ b' ≤ 2 and
0 ≤ b" ≤ 2,
where C' and C'' each represent a tetrahedral position of the garnet-like crystal structure and
C' is at least one element selected from the group consisting of Al and Ga,
C'' is at least one element selected from the group consisting of Si and Ge,
0 ≤ c' ≤ 0.5 and
0 ≤ c'' ≤ 0.4, and
where n = 7 + a' + 2 · a'' - b' - 2·b'' - 3·c' - 4·c" and 5.5 ≤ n ≤ 6.875,
where, when b' = 2, 6.0 < n < 6.875 or 5.5 ≤ n ≤ 6.875 and c' + c'' > 0 and
when B' is Nb, 6.0 < n < 6.4 or 5.5 ≤ n ≤ 6.875 and c' + c'' > 0 and/or a' + a'' > 0.

2. Compound according to Claim 1, wherein 5.9 ≤ n ≤ 6.6, in particular 6.0 < n < 6.5.

3. Compound according to Claim 1 or 2, wherein B' is Ta or is Ta and at least one element selected from the group consisting of Nb, Sb and Bi and/or b' + b" > 0.

4. Compound according to any of Claims 1 to 3, wherein C' is Al and/or C'' is Si and/or c' + c'' > 0.

5. Compound according to any of Claims 1 to 4, wherein a' + a'' > 0.

6. Compound according to any of Claims 1 to 5 having a garnet-like crystal structure of the general chemical formula:
Liₙ[La_{(3-a')}A'_{(a')}[Zr_{(2-b')}B'_{(b')}[Al_{(c')}Si_{(c")}]O₁₂
where La and A' each represent a dodecahedral position of the garnet-like crystal structure and
A' is at least one element selected from the group consisting of Ca, Sr and Ba and 0 < a' < 2,
where Zr and B' each represent an octahedral position of the garnet-like crystal structure and B' is at least one element selected from the group consisting of Ta, Nb, Sb and Bi and
0 < b' ≤ 2, and
where Al and Si each represent a tetrahedral position of the garnet-like crystal structure and
0 ≤ c' ≤ 0.5,
0 ≤ c" ≤ 0.4 and
c' + c'' > 0, in particular c' > 0 and/or c'' >
0, and
where n = 7 + a' + 2·a'' - b' - 2·b'' - 3·c' - 4·c " and 5.5 ≤ n ≤ 6.875, in particular 5.9 ≤ n ≤ 6.6, for example 6.0 < n < 6.5.

7. Compound according to any of Claims 1 to 6,
wherein C' and C", in particular Al and/or Si, each represent the tetrahedral position 24d of the garnet-like crystal structure and/or
B, B' and B'', in particular Zr and B', each represent the octahedral position 16a of the garnet-like crystal structure and/or
A, A' and A", in particular A', each represent the dodecahedral position 24c of the garnet-like crystal structure.

8. Lithium ion conductor, in particular solid-state electrolyte which conducts lithium ions, comprising a compound according to any of Claims 1 to 7.

9. Electrochemical cell, in particular battery, comprising a compound according to any of Claims 1 to 7 or a lithium ion conductor according to Claim 8.

10. Electrochemical cell according to Claim 9, wherein the electrochemical cell is a lithium-sulphur cell, lithium-oxygen cell or lithium ion cell.

11. Electrochemical cell according to Claim 9 or 10, wherein the electrochemical cell comprises the compound according to any of Claims 1 to 7 or the lithium ion conductor according to Claim 8 as solid-state electrolyte which conducts lithium ions, in particular for separating the cathode and the anode.

12. Process for preparing a compound having a garnet-like crystal structure, in particular according to any of Claims 1 to 7, which comprises the process steps:
a) provision of a powder mixture comprising, in particular consisting of:
- at least one lithium compound, and
- at least one compound of an element selected from the group consisting of La, Y, Pr, Nd, Sm, Eu, Gd, Tb, Dy, Ho, Er, Tm and Yb and
- at least one compound of an element selected from the group consisting of Zr, Hf, Sn, Ta, Nb, Sb, Bi, Te, W and Mo, and/or
- optionally at least one compound of an element selected from the group consisting of Al, Ga, Si and Ge and/or
- optionally at least one compound of an element selected from the group consisting of Ca, Sr, Ba, Na and K,
where the powder mixture comprises the compounds of the elements other than lithium in stoichiometric amounts which are selected so that the lithium content of the compound having a garnet-like crystal structure which is to be formed is in a range 5.5 ≤ n ≤ 6,875, for example 5.9 ≤ n ≤ 6.6, in particular 6.0 ≤ n ≤ 6.5;
b) calcination of the powder mixture at a temperature in a temperature range from ≥ 600°C to ≤ 1000°C, in particular from ≥ 850°C to ≤ 950°C,
c) optionally pressing of the powder mixture to form a shaped body, in particular under uniaxial and isostatic pressure,
d) sintering of the powder mixture or of the shaped body at a temperature in a temperature range from ≥ 900°C to ≤ 1250°C, in particular from ≥ 1100°C to ≤ 1200°C.

## Revendications

1. Composé présentant une structure cristalline de type grenat de formule chimique générale :
Liₙ[A_{(3-a'-a")}A'_{(a')}A"_{(a")}][B_{(2-b'-b")}B'_{(b')}B"_{(b")}][C'_{(c')}C_{(c")}O₁₂
dans laquelle A, A' et A" représentent une position dodécaédrique de la structure cristalline de type grenat,
A représentant au moins un élément, choisi dans le groupe constitué par La, Y, Pr, Nd, Sm, Eu, Gd, Tb, Dy, Ho, Er, Tm et Yb,
A' représentant au moins un élément, choisi dans le groupe constitué par Ca, Sr et Ba,
A" représentant au moins un élément, choisi dans le groupe constitué par Na et K,
0 ≤ a' < 2 et
0 ≤ a" < 1,
dans laquelle B, B' et B" représentent une position octaédrique de la structure cristalline de type grenat,
B représentant au moins un élément, choisi dans le groupe constitué par Zr, Hf et Sn,
B' représentant au moins un élément, choisi dans le groupe constitué par Ta, Nb, Sb et Bi,
B" représentant au moins un élément, choisi dans le groupe constitué par Te, W et Mo,
0 ≤ b' ≤ 2 et
0 ≤ b" ≤ 2,
dans laquelle C' et C" représentent une position tétraédrique de la structure cristalline de type grenat,
C' représentant au moins un élément, choisi dans le groupe constitué par Al et Ga,
C" représentant au moins un élément, choisi dans le groupe constitué par Si et Ge,
0 ≤ c' ≤ 0,5 et
0 ≤ c" ≤ 0,4, et
n = 7 + a' + 2*a" - b' - 2*b" - 3*c' - 4*c" et 5,5 ≤ n ≤ 6,875,
lorsque b' = 2, alors 6,0 < n < 6,875 ou 5,5 ≤ n ≤ 6,875 et c' + c" > 0, et
lorsque B' représente Nb, alors 6,0 < n < 6,4 ou 5,5 ≤ n ≤ 6,875 et c' + c" > 0 et/ou a' + a" > 0.

2. Composé selon la revendication 1, 5,9 ≤ n ≤ 6,6, en particulier 6,0 < n < 6,5.

3. Composé selon la revendication 1 ou 2, B' représentant Ta ou Ta et au moins un élément choisi dans le groupe constitué par Nb, Sb et Bi et/ou b' + b" > 0.

4. Composé selon l'une quelconque des revendications 1 à 3, C' représentant Al et/ou C" représentant Si et/ou c' + c" > 0.

5. Composé selon l'une quelconque des revendications 1 à 4, a' + a" > 0.

6. Composé selon l'une quelconque des revendications 1 à 5, présentant une structure cristalline de type grenat de formule chimique générale :
Liₙ[La_{(3-a')}A'_{(a')}[Zr_{(2-b')}B'_{(b')}][Al_{(c')}Si_{(c")}]O₁₂
dans laquelle La et A' représentent une position dodécaédrique de la structure cristalline de type grenat,
A' représentant au moins un élément, choisi dans le groupe constitué par Ca, Sr et Ba et
0 < a' < 2,
dans laquelle Zr et B' représentent une position octaédrique de la structure cristalline de type grenat,
B' représentant au moins un élément, choisi dans le groupe constitué par Ta, Nb, Sb et Bi et
0 < b'≤ 2 et
dans laquelle Al et Si représentent une position tétraédrique de la structure cristalline de type grenat,
0 ≤ c' ≤ 0,5
0 ≤ c" ≤ 0,4 et
c' + c" > 0, en particulier c' > 0 et/ou c" > 0, et
n = 7 + a'+ 2*a" - b' - 2*b" - 3*c'- 4*c" et 5,5 ≤ n ≤ 6,875, en particulier 5,9 ≤ n ≤ 6,6, par exemple 6,0 < n < 6, 5.

7. Composé selon l'une quelconque des revendications 1 à 6,
C' et C", en particulier Al et/ou Si, représentant la position tétraédrique 24d de la structure cristalline de type grenat, et/ou
B, B' et B", en particulier Zr et B', représentant la position octaédrique 16a de la structure cristalline de type grenat et/ou
A, A' et A", en particulier A', représentant la position dodécaédrique 24c de la structure cristalline de type grenat.

8. Conducteur d'ions de lithium, en particulier électrolyte à corps solide conduisant des ions de lithium, comprenant un composé selon l'une quelconque des revendications 1 à 7.

9. Cellule galvanique, en particulier batterie, comprenant un composé selon l'une quelconque des revendications 1 à 7 ou un conducteur d'ions de lithium selon la revendication 8.

10. Cellule galvanique selon la revendication 9, la cellule galvanique étant une cellule lithium-soufre, une cellule lithium-oxygène ou une cellule lithium-ion.

11. Cellule galvanique selon la revendication 9 ou 10, la cellule galvanique comprenant le composé selon l'une quelconque des revendications 1 à 7 ou le conducteur d'ions de lithium selon la revendication 8 en tant qu'électrolyte à corps solide conduisant les ions de lithium, en particulier pour séparer la cathode et l'anode.

12. Procédé pour la production d'un composé présentant une structure cristalline de type grenat, en particulier selon au moins l'une quelconque des revendications 1 à 7, comprenant les étapes de procédé de :
a) mise à disposition d'un mélange sous forme de poudre comprenant, en particulier constitué par :
- au moins un composé de lithium et
- au moins un composé d'un élément choisi dans le groupe constitué par La, Y, Pr, Nd, Sm, Eu, Gd, Tb, Dy, Ho, Er, Tm et Yb, et
- au moins un composé d'un élément choisi dans le groupe constitué par Zr, Hf, Sn, Ta, Nb, Sb, Bi, Te, W et Mo, et/ou
- le cas échéant au moins un composé d'un élément choisi dans le groupe constitué par Al, Ga, Si et Ge et/ou
- le cas échéant au moins un composé d'un élément choisi dans le groupe constitué par Ca, Sr, Ba, Na et K,
le mélange sous forme de poudre présentant les composés des éléments différents du lithium en des quantités stoechiométriques qui sont choisies de manière telle que la teneur en lithium du composé à former, présentant une structure cristalline de type grenat, se situe dans une plage de 5,5 ≤ n ≤ 6,875, par exemple de 5,9 ≤ n ≤ 6,6, en particulier de 6,0 ≤ n ≤ 6,5 ;
b) calcination du mélange sous forme de poudre à une température dans la plage de température de ≥ 600°C à ≤ 1000°C, en particulier de ≥ 850°C à ≤ 950°C,
c) le cas échéant compression du mélange sous forme de poudre en un corps façonné, en particulier sous une pression uniaxiale et isostatique,
d) frittage du mélange sous forme de poudre ou du corps façonné à une température dans une plage de température de ≥ 900°C à ≤ 1250°C, en particulier de ≥ 1100°C à ≤ 1200°C.
